# EUROPEAN PATENT APPLICATION

(11) **EP 1 650 451 A1**
(43) Date of publication of application: **26.04.2006**
(21) Application number: 04747265.9
(22) Date of filing: 09.07.2004
(51) Int. Cl.: F16C 33/64, F16C 19/24, F16C 19/30, C21D 9/40

(54) **ROLLER BEARING WITH STEEL PLATE RACE**

(30) Priority: 25.07.2003 JP 2003279762
(71) Applicant: NTN CORPORATION, Osaka-shi, Osaka 550-0003 (JP)
(72) Inventor: MAEDA, Kikuo, Kuwana-shi, Mie 5110811 (JP); HIRAOKA, Tsuneaki, Iwata-shi, Shizuoka 4380037 (JP); WATANABE, Yasuyuki, Iwata-shi, Shizuoka 4380037 (JP)
(74) Representative: Behrmann, Niels
(86) International application number: PCT/JP2004/009797
(87) International publication number: WO 2005/010386

(57) **Abstract**

A roller bearing assembly includes an outer race (1) prepared from a steel plate and a plurality of rollers (2) wherein the outer race (1) has a raceway surface (1a) to which induction hardening and tempering are applied. The outer race (1) is a shell type. In addition to the raceway surface (1a), an inner surface of an annular collar (6) at one end of the outer race (1) is also subjected to the induction hardening and tempering. An opposite annular collar (7) is left as a raw material without being heat treated so that it can be easily bent.

## Description

### BACKGROUND OF THE INVENTION

### (Field of the Invention)

The present invention relates to a roller bearing assembly utilizing at least one raceway member prepared from a steel plate, such as a shell type needle roller bearing assembly or a thrust needle roller bearing assembly.

### (Description of the Related Art)

Conventional shell type needle roller bearing assemblies generally make no use of an inner race, in which an outer race thereof is prepared from a thin steel plate by the use of a drawing technique and subjected to a surface hardening treatment. For the surface hardening, carburization hardening and tempering is generally employed as they are advantageous in a mass-production of the bearing assemblies. This shell type needle roller bearing assembly can be roughly classified into two models, i.e., a full type roller bearing utilizing no roller retainer or cage and a roller bearing utilizing a combination roller and cage assembly.

When it comes to the roller bearing utilizing the combination roller and cage assembly, the combination roller and cage assembly in which a plurality of needle rollers are operatively retained by a roller retainer or cage is incorporated in an outer race of the roller bearing. Specifically, after the combination roller and cage assembly has been incorporated in the outer race, one of opposite ends of the outer race must be bent to form an annular collar in order to retain the combination roller and cage assembly in position inside the outer race. To facilitate the formation of the annular collar, such one of the opposite ends of the outer race is generally annealed by the use of induction annealing in a manner such as disclosed in, for example, the Japanese Laid-open Patent Publication No. 10-46318.

In the manufacture of the conventional roller bearing assemblies each utilizing steel raceway members, carburization and tempering is generally employed for the hardening treatment intended to minimize wear of the raceway surfaces of the raceway members and also to increase the durability of the raceway surfaces. Accordingly, the use of the carburizing and tempering poses the following problems particularly when flexible manufacturing systems are employed with relatively low volume of production and a wide variety of products.
* To perform the carburization, the carburizing furnace is necessitated, which requires complicated and routine control and management. By way of example, the use of the carburizing furnace requires selection and setting of the atmospheric gas, temperature and treatment time, supervision and administration of quenching oil quality, routine inspection and maintenance of the furnace and so on. Particularly when flexible manufacturing systems are employed with relatively low volume of production and a wide variety of products, various settings and parameters associated with the carburizing furnace have to be changed or modified on lot-by-lot basis, requiring manpower and time.
* Where the number of lots of products is large, each lot including a small number of products, a large length of time is required from the start of carburization to completion.
* Since a large number of work must be heat treated all at a time, a stock of work in process are required.
* When lots are changed frequently, there is a high possibility that workpieces of different lots may be mixed up and, in the event that an accident such as abrupt electric power failure occurring during the heat treatment results in defective workpieces brought about by insufficient heat treatment, damages will be substantial because the number of workpieces heat treated is large.
* In the case of the shell type outer race having annular collars at its opposite ends, annealing is required subsequent to the quench-hardening and tempering so that one or both of the opposite ends of the outer race can be eventually bent to provide the respective annular collars.

### SUMMARY OF THE INVENTION

In view of the foregoing problems and inconveniences, the present invention has for its object to provide an improved roller bearing assembly utilizing at least one raceway member prepared from a steel plate, of a kind in which, when flexible manufacturing systems are employed with relatively low volume of production and a wide variety of products, the length of time required to accomplish the hardening treatment can advantageously be reduced, the equipment used therefor can be simple, the quality can easily be increased and a stock of work in process can advantageously be minimal.

Another important object of the present invention is to reduce the number of manufacturing steps particularly where an annular collar is formed by bending a corresponding end of an outer race of the roller bearing assembly.

In order to accomplish the foregoing object, the present invention provides a roller bearing assembly utilizing at least one raceway member prepared from a steel plate. This roller bearing assembly includes, in addition to the raceway member, a plurality of rollers and is characterized in that at least a raceway surface of the raceway member is subjected to induction hardening and tempering. The tempering may be induction tempering. This roller bearing assembly utilizing at least one raceway member prepared from a steel plate may be either a radial roller bearing utilizing a shell type outer race or a thrust roller bearing utilizing a shell type outer race.

According to the present invention, since the hardening treatment applied to the raceway surface of the raceway member is employed in the form of induction hardening, the following advantages can be obtained.
a) No carburizing furnace is needed and, therefore, neither control nor maintenance of the carburizing furnace is required. Although an induction coil is needed in the practice of the induction hardening, it is very inexpensive as compared with the carburizing furnace.
b) With the induction hardening, the outer race can be heated in a short length of time and be cooled quickly and, therefore, the induction hardening can be carried out in a short length of time from the start of hardening to completion of the hardening.
c) Since the use of induction hardening makes it possible for only the necessary number of items to be heat treated efficiently at any desired time, no stock of works in hand is needed.
d) The heat treating conditions can easily be changed or modified depending on products.
e) Since the electric power and the induction hardening condition can easily be controlled, not only can the mixture of different products be avoided, but also individual control of the individual products can be accomplished, thereby providing a high level of quality.

In a preferred embodiment of the present invention, where the roller bearing assembly is in the form of a roller bearing utilizing a shell type outer race, for example, the raceway surface of the outer race and an inner surface of an annular collar at one end of the outer race are subjected to the induction hardening and tempering. More specifically, the present invention is applicable to a shell type needle roller bearing or the like.

Where the roller bearing assembly utilizing the shell type outer race is provided with a roller retainer or cage, one end of the outer race to be defined as a collar is first left uncompleted and is then, after the combination roller and cage has been mounted inside the outer race, bent to form the collar by means of a bending technique. In such case, according to the induction hardening, only a desired portion of the outer race can easily be hardened and, therefore, the collar at that end of the outer race can be left as a raw material. For this reason, no annealing treatment hitherto required to anneal a collar portion subsequent to the hardening applied to the raceway surface is needed any more and, therefore, the number of process steps can advantageously be reduced.

Where the shell type outer race is employed as described above, the raceway surface of the outer race may have Vickers hardness not lower than HV 653 and the inner surface of the annular collar may have Vickers hardness not higher than HV 300.

When the raceway surface of the outer race is hardened to have a hardness not lower than HV 653 as is the case with that in the conventional one, the durability can be secured advantageously. Also, by allowing one end of the outer race, which is eventually bent to form the collar, to be left as a raw material having a hardness not higher than HV 300, the bending work can easily be performed.

In another preferred embodiment of the present invention, where the roller bearing assembly is designed as a thrust roller bearing assembly, it includes first and second axially aligned raceway members or only one of them. In such case, at least the raceway surface of one of the raceway members is subjected to the induction hardening and tempering.

Even when applied to the thrust roller bearing assembly, as is the case with the shell type roller bearing assembly, the use of the induction hardening and tempering makes it possible to reduce the length of processing time required to accomplish the hardening treatment and also to employ simplified equipment for the hardening treatment advantageously particularly when flexible manufacturing systems are employed with relatively low volume of production and a wide variety of products. Also, the use of the induction hardening and tempering can facilitate increase of the product quality and minimize the stock of work in process.

In a further preferred embodiment of the present invention, an effective hardened layer depth of the raceway surface by the induction hardening is to such an extent that the hardened layer does not reach a rear surface of the raceway member opposite to the raceway surface.

Also, in a still further preferred embodiment of the present invention, the raceway member may be prepared from the steel plate which contains carbon in a quantity not lower than 0.4%. The use of the steel plate containing carbon in a quantity not lower than 0.4% is effective to facilitate induction hardening and tempering.

### BRIEF DESCRIPTION OF THE DRAWINGS

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1 is a longitudinal sectional view of a roller bearing assembly utilizing a steel raceway member according to a first preferred embodiment of the present invention;
Fig. 2A is a longitudinal sectional view of the roller bearing assembly shown in Fig. 1, showing the process of manufacturing the steel raceway member, i.e., an outer race:
Fig. 2B is a fragmentary longitudinal sectional view, on an enlarged scale, of a portion of the outer race, showing the area of the outer race where the hardening process is applied;
Fig. 3 is a longitudinal sectional view of a roller bearing assembly utilizing a steel raceway member according to a second preferred embodiment of the present invention; and
Fig. 4 is a longitudinal sectional view of a roller bearing assembly utilizing steel raceway members according to a third preferred embodiment of the present invention.

### DETAILED DESCRIPTION OF THE EMBODIMENTS

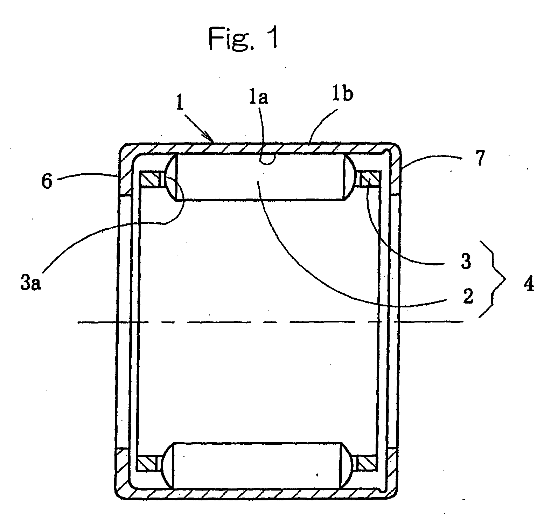

The first preferred embodiment of the present invention will be described with particular reference to Figs. 1 to 2B. In this embodiment, the present invention is applied to a roller bearing assembly utilizing a shell type outer race. The roller bearing assembly includes a shell type outer race 1 serving as a raceway member, a plurality of rollers 2 and a roller retainer or cage 3. The rollers 2 are in the form of, for example, a needle roller. The plural rollers 2 are operatively retained within respective pockets 3a defined in the cage 3 in equally spaced relation to each other in a direction circumferentially thereof, forming a combination roller and cage assembly 4.

The outer race 1 includes a cylindrical body 1b having its opposite ends formed with respective annular collars 6 and 7. The annular collar 6 has a wall thickness equal to that of the cylindrical body 1b, whereas the annular collar 7 has a wall thickness smaller than that of the cylindrical body 1b.

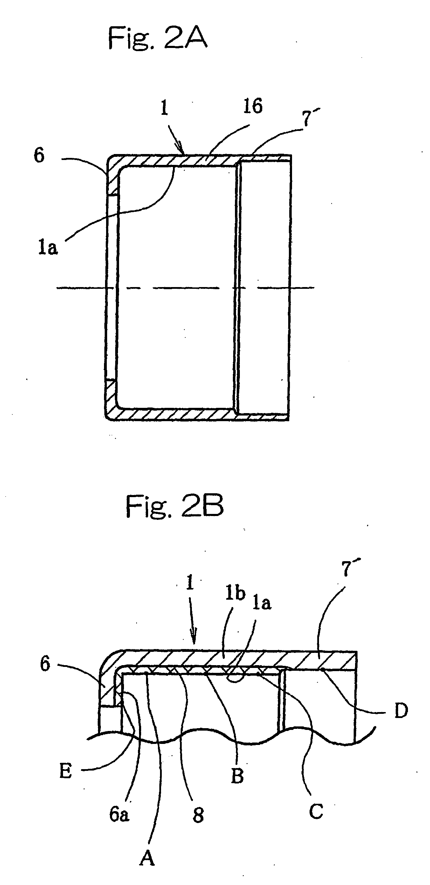

As best shown in Fig. 2B, the cylindrical body 1b has an inner peripheral surface that serves as a raceway surface 1a with which the rollers 2 contact rollingly. This raceway surface 1a and the collar 6 are subjected to induction hardening and tempering to provide a surface hardened layer 8 shown by the cross-hatched lines in Fig. 2B. This surface hardened layer 8 has an effective hardened layer depth, which does not reach an outer peripheral surface of the outer race 1 that defines a rear surface opposite to the raceway surface 1a. However, depending on various conditions including the thickness of a steel plate used to form the outer race 1, the effective hardened layer depth may extend over the entire plate thickness of the outer race 1.

For the manufacture of the outer race 1, a steel plate is deep-drawn to provide a cup-like product, followed by removal of a portion of the bottom of the cup-like product to thereby provide the cylindrical body 1b with the annular collar 6 formed at one end thereof as shown in Fig. 2A. At this stage of manufacture, the opposite end portion 7' of the cup-like product, which eventually forms the other annular collar 7, extends straight outwardly from the cylindrical body 1b and is press-worked to have a wall thickness smaller than that of the cylindrical body 1b. After this press-work, the cup-like product is subjected to the induction hardening and tempering with the end portion 7' left unhardened. As will become clear from the subsequent description, the end portion 7' of the cup-like product, i.e., the axially outwardly extending straight end portion 7' of the outer race 1 is, after the combination roller and cage assembly 4 has been inserted into the outer race 1, bent radially inwardly to provide the annular collar 7 to thereby complete the outer race 1. Since this end portion 7' is left as a raw material without being surface hardened, it can easily be bent to complete the annular collar 7.

The deep-drawing used to provide the cup-like product and the press-work used to reduce the wall thickness of the end portion 7', both discussed above, can be accomplished by the use of, for example, a transfer press, a progressive press, a single purpose press.

The steel plate used to form the outer race 1 is preferably of a kind containing carbon (C) in a quantity of not lower than 0.4%. By way of example, a steel plate made of carbon steel for machine structural use (S40C ~ S55C), alloy steel for machine structural use (SCM440~SCM445), manganese steel for machine structural use (SMN443) or carbon tool steel (SK5) can be conveniently used as material for the outer race 1.

It is to be noted that carburized steel has hitherto been used in the conventional outer race which requires the carburizing, and contains carbon in a rather small quantity within the range of 0.12 to 0.23%. However, the steel plate used as a material for the outer race 1, which requires the induction hardening in accordance with the present invention, preferably contains carbon (C) in a quantity of not lower than 0.4%, as discussed above, since the surface hardening relies solely on the carbon contained in the steel plate.

The heat treatment specification for the outer race 1 is, although it may vary depending on press workability of steel material used, such that a portion of the hardened layer 8, which defines the raceway surface 1a, has a hardness not lower than HV 653 over the entire width of the raceway surface 1a (i.e., at any point A, B and C shown in Fig. 2B) and an effective hardened layer depth not smaller than 0.25 mm. The effective hardened layer depth is attained in a region of the hardened layer 8 where the hardness is not lower than HV 653. However, a portion at the depth of 0.5 mm from the raceway surface 1a has a hardness not higher than HV 300, that is, about that of a raw material.

The end portion 7' (for example, a point D shown in Fig. 2B), which eventually forms the annular collar 7 of the outer race 1 when subsequently bent radially inwardly, has a hardness of not higher than HV 300. On the other hand, the collar 6 of the outer race 1 (for example, a point E) has a surface hardness not lower than HV 653, and a portion of the collar 6 having a hardness of HV 653 extends a depth not smaller than 0.1 mm.

It is to be noted that the hardness of the surface at each of the various points may be substituted by that measured at the depth of 0.02 mm. In other words, the hardness of the surface at each of the various points that is measured at the depth of 0.02 mm may fall within the hardness range discussed above. The hardness at each point discussed above is applicable where the steel material used for the outer race 1 is chosen carbon tool steel (for example, SK5).

Hereinafter, the heat treatment specification for the product (referred to as "Developed Product") of the foregoing embodiment of the present invention is compared with that of the conventional product in the following table.

**Table 1 Heat Treatment Specification**

| | Conventional Product (carburization) | Developed Product (induction hardening) |
|---|---|---|
| Surface Hardness | Not lower than HV 653 | ← |
| Effective Hardened Layer Depth | HV 513 not smaller than 0.1 mm | HV 653 not smaller than 0.25 mm |
| Remarks | Containing the carburized and annealed region. [Only the end portion that is bent after the heat treatment is annealed.] | Containing the region of the effective layer hardened by the induction hardening. [the end portion to be bent and collar surfaces unhardened for press-fit] |

With the roller bearing assembly so constructed as hereinabove described in accordance with the present invention, since the process of hardening the raceway surface 1a of the outer race 1 includes induction hardening and tempering, the following advantages can be obtained.
a) No carburizing furnace is needed and, therefore, neither control nor maintenance of the carburizing furnace is required. Although an induction coil is needed in the practice of the induction hardening, it is very inexpensive as compared with the carburizing equipment.
b) With the induction hardening, the outer race can be heated in a short length of time and be cooled quickly and, therefore, the induction hardening can be carried out in a short length of time from the start of hardening to completion of the hardening.
c) Since the use of the induction hardening makes it possible for only the necessary number of items to be heat treated efficiently at any desired time, no stock of items in process is needed.
d) The heat treating conditions can easily be changed or modified, depending on products.
e) Not only can the hardening conditions be controlled easily enough to avoid defective products, but also individual control of the individual products can be accomplished to provide a high level of quality.

With respect to the individual control of the individual products, since integrated production from press work to heat treatment can be accomplished, the quality of products at the various manufacturing steps can easily be inspected with production line method and, in particular, the quality of the products prior to and subsequent to the heat treatment can be ascertained extremely easily.

By way of example, in the event that any defect resulting from the presence of flaws is found in the heat treated products, the use of the carburization hardening makes it difficult for the attendant worker to locate one of the process steps of heat treatment where the flaw has resulted in and, therefore, the whole number of the products after the heat treatment are required to be inspected. In contrast thereto, the use of the induction hardening, which enables the integrated production, makes it possible for the attendant worker to perform the inspection only before and after the heat treatment and, therefore, the whole number of the products are not required to be inspected.
f) The use of the induction hardening can enable the outer race 1, except for that end portion 7' to be subsequently bent to form the collar 7, to be surface hardened and, therefore, no annealing such as hitherto required is needed; with the result that one of the manufacturing steps can advantageously be eliminated (See Table 2 below.). The work of bending that end portion 7' to form the collar 7 can be performed while that end portion 7' has a hardness of not higher than HV 300 that is possessed by the raw material used for the outer race 1 and, therefore, as compared with an annealed end portion of the conventional outer race (with the hardness being about HV 500), it can easily be accomplished satisfactorily.
g) Also, the integrated production from press work to heat treatment can be accomplished as discussed above, and the production line can have a length and a surface layout, which are drastically reduced as compared with that hitherto required where the carburization hardening is performed.

The following table, Table 2, illustrates the summary of the differences between the product according to the present invention and the conventional product.

**Table 2**

| | Band Steel Material | Press Work | Hardening | Annealing |
|---|---|---|---|---|
| Conventional | Carburized Steel · SPCC | For example, transfer press, progressive press, single purpose press. | Carburization Hardening and Tempering | Induction Annealing |
| Invention | Prepared from the steel plate containing C in a quantity not lower than 0.4%. For example, S40C~S55C, SCM440~ SCM445, SMN443, SK5 and so on. | | Induction Hardening and Tempering | Not required |

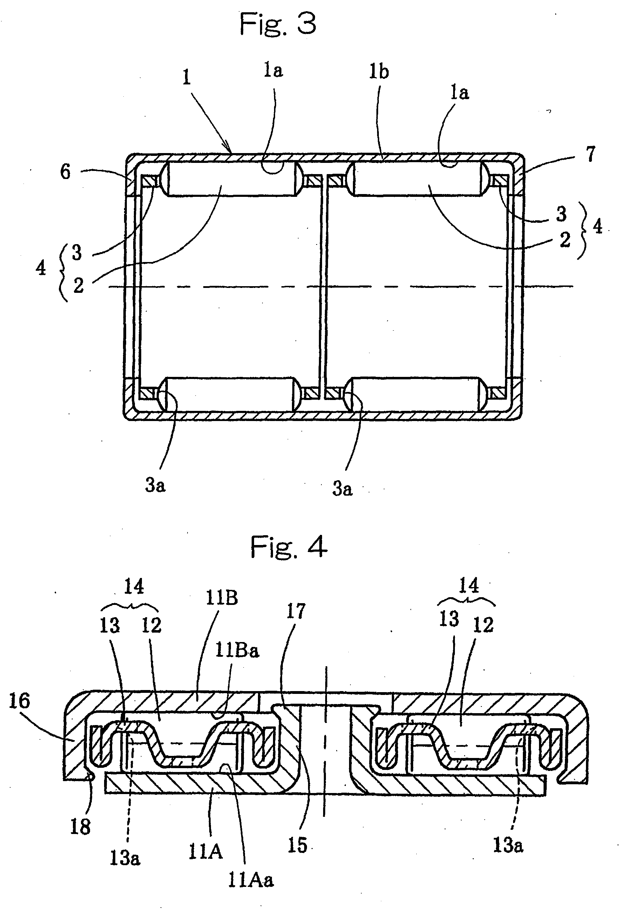

It is to be noted that although, in describing the foregoing embodiment of the present invention, the roller bearing assembly has been shown as having a single row of the needle rollers, the present invention can be equally applied to the roller bearing assembly having double rows of rollers. In a second preferred embodiment of the present invention shown in Fig. 3, the roller bearing assembly makes use of two combination roller and cage assemblies 4 and 4 arranged within the outer race 1 in coaxial relation to each other. Other structural features of the roller bearing assembly shown in Fig. 3 are similar to those of the roller bearing assembly according to the first embodiment and, accordingly, the details thereof are not reiterated here for the sake of brevity.

Also, while the roller bearing assembly of the first embodiment is utilized as a radial bearing, the present invention can also be equally applied to a thrust roller bearing utilizing raceway members made of steel material. Application of the present invention to the thrust bearing is shown in Fig. 4 as a third preferred embodiment.

The roller bearing assembly includes first and second axially opposed raceway members 11A and 11B, a row of rollers 12 drivingly intervened between the first and second raceway members 11A and 11B and a roller cage 13. The rollers 12 are in the form of, for example, a needle roller, and are operatively retained within pockets 13a defined in the cage 13 in equally spaced relation to each other in a direction circumferentially thereof. The rollers 12 and the cage 13 cooperate with each other to define a combination roller and cage assembly 14. The first raceway member 11A defines an inner race whereas the second raceway member 11B defines an outer race.

The first raceway member 11A includes a cylindrical body having its inner end formed with an axially outwardly extending annular collar 15, whereas the second raceway member 11B includes a cylindrical body having its outer end formed with an axially inwardly extending annular collar 16. The annular collars 15 and 16 are formed with crimped projections 17 and 18, respectively, at a plurality of locations spaced a distance from each other in a direction circumferentially thereof for engagement with the roller cage 13, with the first and second raceway members 11A and 11B and the combination roller and cage assembly 14 held in position in a non-separable fashion relative to each other.

It is, however, to be noted that each of the first and second raceway members 11A and 11B may be of a type having no collar such as designated by 15 and 16.

According to the third embodiment of the present invention, a raceway surface 11Aa of the first raceway member 11A and a raceway surface 11Ba of the second raceway member 11B are subjected to the induction hardening and tempering. However, respective portions which eventually form the crimped projections 17 and 18 are preferably left as a raw material without being hardened. With respect to the material for the first and second raceway members 11A and 11B and the heat treatment specification for the induction hardening and tempering, the same material and heat treatment specification as those employed in the practice of the first preferred embodiment can be employed.

Even when the present invention is applied to the thrust roller bearing assembly such as shown in and described with reference to Fig. 4, as is the case with the shell-type roller bearing assembly shown in and described in connection with the first embodiment of the present invention, the use of the induction hardening and tempering makes it possible to reduce the length of processing time required to accomplish the hardening treatment and also to employ simplified equipment for the hardening treatment advantageously particularly when flexible manufacturing systems are employed with relatively low volume of production and a wide variety of products. Also, the use of the induction hardening and tempering can facilitate increase of the product quality and minimize the stock of work in process.

It is to be noted that where the present invention is applied to the thrust roller bearing assembly, only one of the first and second raceway members 11A and 11B positioned one inside the other may be subjected to the induction hardening and tempering. Also, the thrust roller bearing assembly may be of a type including only one raceway member, in which case the induction hardening and tempering may be directed to the raceway member.

Although the present invention has been fully described in connection with the preferred embodiments thereof with reference to the accompanying drawings which are used only for the purpose of illustration, those skilled in the art will readily conceive numerous changes and modifications within the framework of obviousness upon the reading of the specification herein presented of the present invention. Accordingly, such changes and modifications are, unless they depart from the scope of the present invention as delivered from the claims annexed hereto, to be construed as included therein.

## Claims

1. A roller bearing assembly comprising at least one raceway member prepared from a steel plate and a plurality of rollers; and
wherein at least a raceway surface of said at least one raceway member is subjected to induction hardening and tempering.

2. The roller bearing assembly as claimed in Claim 1, wherein the raceway member is a shell type outer race having its opposite ends formed with annular collars and wherein the raceway surface of the outer race and an inner surface of one of the annular collars are subjected to the induction hardening and tempering.

3. The roller bearing assembly as claimed in Claim 2, wherein the raceway surface of the outer race has a hardness not lower than HV 653 and an inner surface of the other annular collar has a hardness not higher than HV 300.

4. The roller bearing assembly as claimed in Claim 1, wherein the roller bearing assembly is a thrust roller bearing assembly comprising first and second axially opposed raceway members or only one of them and wherein at least the raceway surface of one of the first and second raceway members is subjected to the induction hardening and tempering.

5. The roller bearing assembly as claimed in Clam 1, wherein the raceway surface of the raceway member has an effective hardened layer depth in which the induction hardening is performed, said depth of the hardened layer being so chosen as to be smaller than the plate thickness of the raceway member.

6. The roller bearing assembly as claimed in Claim 1, wherein the raceway member is prepared from the steel plate containing carbon in a quantity not lower than 0.4%.
